# EUROPÄISCHE PATENTSCHRIFT

(11) **EP 1 241 438 B1**
(45) Veröffentlichungstag und Bekanntmachung des Hinweises auf die Patenterteilung: **13.10.2010**
(21) Anmeldenummer: 02100241.5
(22) Anmeldetag: 13.03.2002
(51) Int. Cl.: G01B 7/30, G01D 5/244, G01D 3/08

(54) **Anordnung zur Winkelmessung**
Angle detecting device
Dispositif de mesure d'angle

(30) Priorität: 13.03.2001 DE 10112352
(43) Veröffentlichungstag der Anmeldung: 18.09.2002
(73) Patentinhaber: NXP B.V., 5656 AG Eindhoven (NL)
(72) Erfinder: Weser, Marcus, Weisshausstrasse 2, 52066 Aachen (DE)
(74) Vertreter: Schouten, Marcus Maria

(56) Entgegenhaltungen:
- EP-A- 0 927 868
- WO-A-95/14262

## Beschreibung

Die Erfindung bezieht sich auf eine Anordnung zur Winkelmessung.

Bekannte Anordnungen zur Winkelmessung auch als Winkel-Meßsysteme bezeichnet, verenden u.a. den magnetoresistiven Effekt, d.h. eine Veränderung des elektrischen Widerstandes in Abhängigkeit von der Feldstärke eines äußeren Magnetfeldes. Typische Sensoren dieser Art sind z.B. die unter der Bezeichnung "KMZ 41" von Philips Semiconductors vertriebenen Sensoren.

Diese Sensoren liefern zwei bezüglich des Drehwinkels sinusförmige Ausgangssignale, die elektrisch um 90° zueinander phasenverschoben sind Die Signale können als Real- und Imaginärteil einer komplexen Zahl aufgefaßt werden, so daß eine Winkelbestimmung mit Hilfe der Arcustangens-Funktion möglich ist. In gegenwärtig auf dem Markt befindlichen Winkel-Meßsystemen, die z.B. aus einer Kombination eines der unter der Bezeichnung "KMZ 41" von Philips Semiconductors vertriebenen Sensoren mit einem unter der Bezeichnung UZZ900x ebenfalls von Philips Semiconductors vertrieben, eine Signalverarbeitungseinrichtung umfassenden integrierten elektronischen Schaltkreis bestehen, erfolgt diese Winkelbestimmung durch einen mit dem Namen "CORDIC" bezeichneten Algorithmus.

Aus der EP 0 927 868 A2 ist eine Sensoranordnung mit Meßfehlererkennung bekannt, die zwei Sensoren und eine Auswerteeinheit zur Ermittlung eines Meßsignals aus zwei von je einem Sensor ausgegebenen Sensorsignalen umfaßt. Eine derartige Sensoranordnung weist beispielsweise zwei Winkelsensoren auf, die die Winkelposition eines Meßobjekts gegenüber der Sensoranordnung mißt. Um bei einer solchen Sensoranordnung auftretende Fehler, insbesondere am Eingang der Auswerteeinheit bei der Umwandlung der Sensorsignale in A/D-Wandlereinheiten, feststellen zu können, sind gemäß der Lehre der EP 0 927 868 A2 Umschaltmittel vorgesehen zum Schalten von zwei Schaltzuständen derart, daß in jedem Schaltzustand den A/D-Wandlereinheiten je ein Sensorsignal zugsführt ist, daß die Zuordnung der Sensorsignale zu den A/D-Wandlereinheiten in den beiden Schaltzuständen unterschiedlich ist und daß die Auswerteeinheit zur Bestimmung eines Fehlersignals aus zwei während jeweils eines Schaltzustands ermittelten Meßsignalen ausgestaltet ist.

Aus der DE 198 49 910 A1 ist ein offsetkompensiertes Winkelmeßsystem bekannt. Bei der dort beschriebenen Anordnung zur Messung eines Winkels zwischen einem Magnetfeld und einem MR-Sensor, der wenigstens zwei um 90° zueinander phasenverschobene elektrische Sensorsignale liefert, die einem A/D-Umsetzer zugeführt werden, dem eine Winkelberechnungsanordnung nachgeschaltet ist, wird zur automatischen und kontinuierlichen Offsetkompensation der statischen und dynamischen Offsets in einer Betragsberechnungsanordnung der Sensorsignalbetrag der beiden Sensorsignale nach einer vorgegebenen Formel und daraus die Änderung des Sensorsignalbetrages in Abhängigkeit vom berechneten Winkel bestimmt und in Abhängigkeit dieser Betragsänderung eine Offsetregelung der Sensorsignale vorgenommen.

In der Deutschen Patentanmeldung 100 22 175.0 vom 06.05.2000 ist eine Anordnung zur Winkelmessung mit einem Winkelsensor beschrieben, der zwei relativ zueinander um 90° phasenverschobene Sensorsignale liefert, deren Amplituden von der Temperatur abhängig sind Um eine Überwachung der einwandfreien Arbeitsweise der Anordnung zu ermöglichen, sind gemäß der Lehre dieser Anmeldung in der dort beschriebenen Anordnung ein Temperatursensor und ein Mikroprozessor vorgesehen. Der Mikroprozessor berechnet in Abhängigkeit eines von dem Temperatursensor gelieferten Temperaturwerts erwartete Amplitudenwerte der Sensorsignale, vergleicht diese mit den tatsächlichen Amplitudenwerten der Sensorsignale und erzeugt dann ein Fehlersignal, wenn die Abweichung zwischen den erwarteten und den tatsächlichen Amplitudenwerten einen vorgegebenen Grenzwert überschreitet.

Bei der in der Deutschen Patentanmeldung 100 22 175.0 beschriebenen Anordnung variieren die Amplitudenwerte der Sensorsignale aufgrund der Herstellung und Art des jeweils verwendeten Sensorelements, z.B. der von Philips Semiconductors vertriebenen Sensortypen "KMZ 41" oder "KMZ43". Zusätzlich ergibt sich eine signifikante Abhängigkeit der Amplitudenwerte der Sensorsignale von der Temperatur, die mit Hilfe des Temperatursensors eingeschränkt werden soll. Aus diesem Grund muß der gemäß der Lehre der Deutschen Patentanmeldung 100 22 175.0 durch den vorgegebenen Grenzwert definierte Toleranzbereich, d.h. die zulässige Abweichung zwischen den erwarteten und den tatsächlichen Amplitudenwerten der Sensorsignale, breit gehalten werden.

Die beschriebenen Anordnungen haben den Nachteil, daß mit den in ihnen dargelegten Methoden der Diagnose nur große Fehlerzustände, wie der Verlust des Sensormagneten oder ein Bruch elektrischer Verbindungen, erkannt werden. Eine weitergehende Bewertung der gemessenen Sensorsignale hinsichtlich ihrer Genauigkeit und Zuverlässigkeit ist mit den beschriebenen Anordnungen nicht möglich.

Die Erfindung hat die Aufgabe, eine Anordnung zur Winkelmessung zu schaffen, die eine Überwachung und Bewertung der gemessenen Sensorsignale hinsichtlich ihrer Genauigkeit und Zuverlässigkeit ermöglicht.

Erfindungsgemäß wird diese Aufgabe durch eine Anordnung zur Winkelmessung gemäß Anspruch 1 gelöst.

Durch die erfindungsgemäßen Maßnahmen wird in einfacher und zuverlässiger Weise eine Überwachung und Bewertung der gemessenen Sensorsignale hinsichtlich ihrer Genauigkeit und Zuverlässigkeit ermöglicht. Über die aus den bekannten Druckschriften entnehmbare Meßfehlererkennung hinaus wird eine Anordnung zur Winkelmessung mit einer leistungsfähigen Diagnosefunktion geschaffen. Dabei wird das Ausgangssignal nicht nur auf extreme Fehlerzustände hin untersucht, sondern auch auf geringe Abweichungen. Das Ergebnis der in der Signalverarbeitungseinrichtung durchgeführten Berechnung des Winkels aus den gemessenen Sensorsignalen wird bewertet; diese Bewertung wird durch das Fehlersignal ausgedrückt und kann für eine Zuverlässigkeitsprüfung bei der Weiterverarbeitung eines dem aus den Sensorsignalen berechneten Winkel zugeordneten Winkelsignals herangezogen werden.

Dabei ist eine hohe Auflösung erkennbarer Abweichungen zwischen den erwarteten Amplitudenwerten und den Amplituden-Istwerten erzielbar. Eine weitere Anforderung im Hinblick auf Winkel-Meßsysteme der beschriebenen Art ist auf diese Weise erfüllbar. Anforderungen wie Erhöhung der Betriebssicherheit und Zuverlässigkeit sowie eine verbesserte Selbstüberwachung des Winkel-Meßsystems lassen sich so einfach erreichen.

In einer vorteilhaften Weiterbildung der erfindungsgemäßen Anordnung ist der Zuverlässigkeitsklassen-Information ein gemäß dem Wertebereich, in den die Abweichung zwischen den erwarteten Amplitudenwerten und den Amplituden-Istwerten der Sensorsignale fällt, individuell digital codierter Bit-Code im Fehlersignal zugeordnet. Damit wird die Voraussetzung für eine sichere, digitale Auswertung der Zuverlässigkeitsklassen-Information erreicht.

Eine weitere Ausgestaltung der Erfindung zeichnet sich dadurch aus, daß in der Signalverarbeitungseinrichtung zur Berechnung eines Winkels aus den Sensorsignalen ein sogenannter "CORDIC"-Algorithmus eingesetzt und zur Bestimmung der Amplituden-Istwerte der Sensorsignale die in diesem CORDIC-Algorithmus ohnehin vorgesehene Radius-Bestimmung herangezogen wird. Dies ermöglicht eine besonders einfache und kostengünstige Realisierung der Erfindung in bereits bestehenden Winkel-Meßsystemen.

Gemäß einer weiteren Fortbildung der Erfindung ist die Signalverarbeitungseinrichtung zum Erzeugen eines dem aus den Sensorsignalen berechneten Winkel zugeordneten Winkelsignals eingerichtet und wird das Fehlersignal von der Signalverarbeitungseinrichtung zusammen mit dem Winkelsignal ausgegeben, wodurch eine einfache und unmittelbare gemeinsame Weiterverarbeitung und Auswertung ermöglicht wird.

Vorzugsweise umfaßt die erfindungsgemäße Anordnung ein Steuergerät, welchem das Winkelsignal und das Fehlersignal zugeführt werden und welches zum Ausführen unterschiedlicher Funktionen in Abhängigkeit von der im Fehlersignal enthaltenen Zuverlässigkeitsklassen-Information ausgebildet ist. Insbesondere können dadurch je nach dem Inhalt der Zuverlässigkeitsklassen-Information unterschiedliche Steuerprogrammabläufe verwirklicht werden, die der Größe der Abweichung zwischen den erwarteten Amplitudenwerten und den Amplituden-Istwerten Rechnung trägt.

Als ausgewählte Schaltungs- und/oder Betriebsparameter der Anordnung zur Winkelmessung können bevorzugt ein einen gemessenen Temperaturwert darstellendes Temperatursignal, aber ebenso ein Kenndaten des Winkelsensors repräsentierendes Signal herangezogen werden. Dazu kann die erfindungsgemäße Anordnung insbesondere einen Temperatursensor zum Messen eines Temperaturwertes und zum Bereitstellen des den gemessenen Temperaturwert darstellenden Temperatursignals aufweisen. Dieser Temperatursensor dient vorzugsweise zum Messen der Temperatur des Winkelsensors, jedoch lassen sich auf die gleiche Art auch andere Temperatureinflüsse von anderen Teilen des Winkel-Meßsystems kompensieren. Andererseits kann die Signalverarbeitungseinrichtung auch durch Bereitstellen von Kenndaten der verwendeten Winkelsensoren in die Lage versetzt werden, die Grenzwerte und damit die dadurch bestimmten Wertebereiche für die ermittelte Abweichung zwischen den erwarteten Amplitudenwerten und den Amplituden-Istwerten der Sensorsignale genau auf die jeweiligen Winkelsensoren abzustimmen. Einflüsse typbedingter Unterschiede der Kenndaten der verwendeten Winkelsensoren oder sogar individueller Streuungen der Kenndaten der verendeten Winkelsensoren eines Typs lassen sich auf diese Weise wenigstens nahezu vollständig eliminieren, so daß die erzeugten Fehlersignale ein exaktes Abbild tatsächlich im Winkel-Meßsystem auftretender Fehler darstellen.

Vorteilhaft sind die Signalverarbeitungseinrichtung und/oder das Steuergerät für eine anhand der Zuverlässigkeitsklassen-Information durchgeführte Plausibilitätsprüfung der vom Winkelsensor gelieferten Sensorsignale eingerichtet. Damit läßt sich ermitteln, als wie verläßlich die gemessenen Sensorsignale einzustufen sind, was für ihre weitere Auswertung eine Rolle spielen kann.

Die Erfindung wird im folgenden anhand der Zeichnung noch näher erläutert. Darin zeigen
- Fig. 1: drei schematische Darstellungen zum Prinzip eines Winkelsensors,
- Fig. 2: eine schematische Diagrammdarstellung einer Plausibilitätsüberprüfung der vom Winkelsensor nach fig. 1 gelieferten Sensorsignale und
- Fig. 3: eine schematische, beispielhafte Diagrammdarstellung der erfindungsgemäßen Einteilung von Wertebereichen für die Abweichung zwischen den erwarteten Amplitudenwerten und den Amplituden-Istwerten der Sensorsignale.

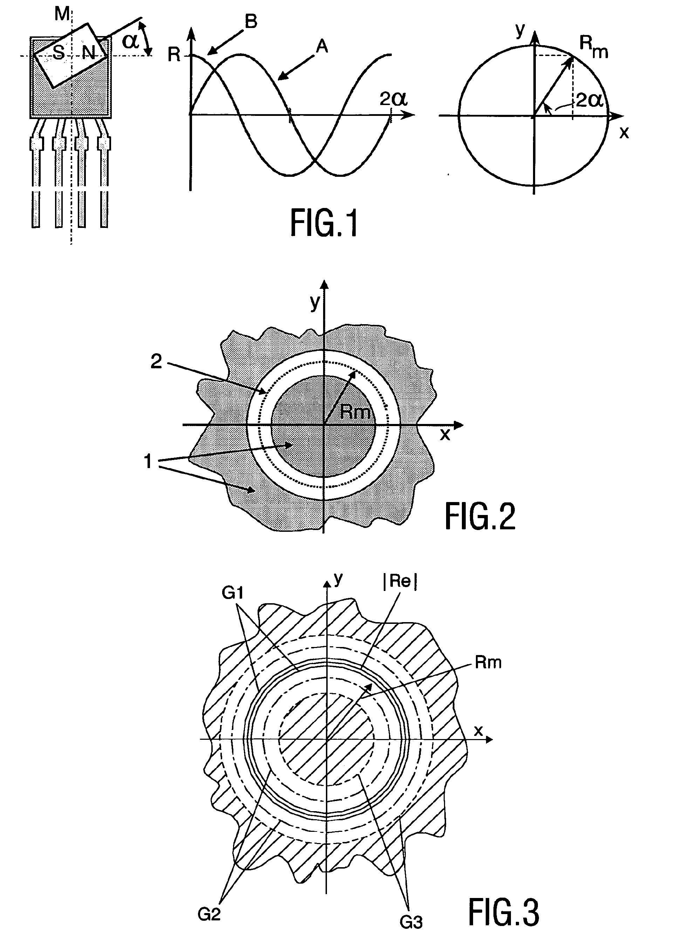

Fig 1 zeigt im linken Teil eine grob schematische Darstellung eines Winkelsensors mit einem drehbaren Magneten M, dessen Nordpol mit N und dessen Südpol mit S bezeichnet ist. Der Drehwinkel des Magneten M gegenüber dem Sensor ist mit **a** bezeichnet.

Im mittleren Teil der Figur 1 zeigt eine Grafik schematisch zwei elektrisch gegeneinander um 90° phasenverschobene Sensorsignale A und B über dem Doppelten des Drehwinkels **a** aufgetragen, die ein Maß für die Veränderung des elektrischen Widerstands R des Winkelsensors in Abhängigkeit vom Magnetfeld des Magneten M darstellen.

Die gegeneinander um 90° phasenverschobenen Sensorsignale Aund B können als Realteil x (auch als "Cosinus-Signal" bezeichnet; hier das Sensorsignal B) und als Imaginärteil y (auch als "Sinus-Signal" bezeichnet; hier das Sensorsignal A) einer komplexen Zahl aufgefaßt werden, die mit der Euler-Relation in der komplexen Ebene einen Vektor Rm (auch als "Zeiger in der komplexen Ebene" bezeichnet) bilden, der den gemessenen Wert Rm des elektrischen Widerstands R des Winkelsensors in Abhängigkeit vom Magnetfeld des Magneten M darstellt. Eine Bestimmung des (mechanischen) Winkels **a** ist mit Hilfe der Arcustangensfunktion möglich. In gegenwärtigen Winkel-Meßsystemen (bestehend z.B. aus den von Philips Semiconductors gelieferten Bausteinen der Typen "KMZ 41" und "UZZ900x") erfolgt dies mit dem sogenannten "CORDIC"-Algorithmus, mit dem auch der Betrag des gemessenen Wertes Rm des elektrischen Widerstands R des Winkelsensors bestimmt wird. Die Länge des Vektors Rm in der komplexen Ebene, d.h. sein Betrag ist unabhängig vom gemessenen mechanischen Winkel **a**.

In einer Weiterentwicklung dieser Anordnung bzw. dieses Verfahrens können die Länge, d.h. der Betrag des Vektors Rm des gemessenen Wertes des elektrischen Widerstands R des Winkelsensors, wie er sich aus der Berechnung mit dem "CORDIC"-Algorithmus ergibt, auf seine Plausibilität überprüft werden. Es kann ein Wertebereich für den Betrag des Vektors Rm definiert werden, innerhalb dessen eine einwandfreie Arbeitsweise des Winkelsensors und insgesamt des Winkel-Meßsystems angenommen wird. Dieser Wertebereich ist in Fig. 2 schematisch dargestellt und dort mit dem Bezugszeichen 2 bezeichnet. Er wird auch "Save Operation Area" ("SOA") oder auch ΔR-Bereich genannt. Eine Beschreibung dazu findet sich in der Deutschen Patentanmeldung 100 22 175.0. Die Berechnung des "SOA" erfolgt dort mit Hilfe eines Mikroprozessors unter Heranziehung eines am Winkelsensor gemessenen Temperaturwerts. Liegen dabei die aktuellen Amplitudenwerte der Sensorsignale A und B und damit der Vektor Rm im erwarteten Wertebereich 2, dann ist kein Fehler in der Messung vorhanden. Die Sensorsignale A und B sind plausibel.

Fällt dagegen der Vektor Rm in den außerhalb des Wertebereichs 2 liegenden Bereich 1, der in Fig 2 getönt dargestellt ist, bedeutet dies eine unzulässige Abweichung in wenigstens einem der Sensorsignale A und B und damit dem Betrag des Vektors Rm. Die Abweichung zwischen den erwarteten Amplitudenwerten und den Amplituden-Istwerten der Sensorsignale A und B übersteigt den durch die Berandungen des Wertebereichs 2 gegebenen Grenzwerte, und der gemessene Werte des Betrags des Vektors Rm und damit der Sensorsignale A und B wird als "nicht plausibel" eingestuft.

Zum Beispiel ist beim Fehlen des Magneten M die Amplitude der Sensorsignale A und B näherungsweise Null. Der Vektor Rm liegt dann außerhalb des Wertebereichs 2 und der Fehlerzustand wird erkannt.

In Winkel-Meßsystemen der vorstehenden Art variieren die Amplituden-Istwerte der Sensorsignale A und B aufgrund der Herstellung und Art der Winkelsensoren, wie sie z.B. unter den Typenbezeichnungen "KMZ 41" oder "KMZ43" von Philips Semiconductors vertrieben werden. Zusätzlich ergibt sich die bereits genannte Abhängigkeit der Amplituden-Istwerte der Sensorsignale A und B von der Temperatur, die mit Hilfe der in der Deutschen Patentanmeldung 100 22 175.0 beschriebenen, einen Temperatursensor umfassenden Anordnung eingeschränkt werden soll.

Aus diesem Grund wird in der Deutschen Patentanmeldung 100 22 175.0 nur ein Wertebereich 2 (d.h. ein "SOA" bzw. ein ΔR-Bereich) definiert. Dieser Wertebereich 2 wird aufgrund der auftretenden Toleranzen breit gehalten.

Der entscheidende Nachteil ist, daß mit dieser Methode der Diagnose nur große Fehlerzustände, wie Verlust des Magneten M oder ein Bruch von elektrischen Verbindungen erkannt werden. Eine genauere Bewertung des zur Zeit gemessenen Winkelsignals hinsichtlich der Genauigkeit ist mit der in der Deutschen Patentanmeldung 100 22 175.0 gegebenen Lehre nicht möglich.

Eine hohe Auflösung erkennbarer Abweichungen stellt eine weitere Anforderung im Hinblick auf das Winkel-Meßsystem dar. Dies ergibt sich durch Anforderungen wie Betriebssicherheit, Zuverlässigkeit und Selbstüberwachung.

Grundgedanke der vorliegenden Erfindung ist es, den Bereich der "SOA" durch eine Anzahl (Mehrzahl) von gestaffelten Grenzwerten in verschiedene Wertebereiche, hier auch als "Stufen" bezeichnet, aufzuteilen. Die jeweiligen maximalen Abweichungen zwischen dem Betrag lRel des Vektors Re des erwarteten Wertes des elektrischen Widerstands R des Winkelsensors, der sich aus den erwarteten Amplitudenwerten der Sensorsignale A und B ergibt, und dem Betrag lRm l des Vektors Rm des aktuell gemessenen Wertes des elektrischen Widerstands R des Winkelsensors werden in einem Ausführungsbeispiel, wie es im Diagramm nach Fig. 3 schematisch dargestellt ist, nach folgenden Kriterien festgelegt:
- "Stufe 0":: |Rm|-|Re|>40%* |Re|, definiert durch Grenzwerte G3
- "Stufe 1":: |Rm|-|Re|<40%|Re|, definiert durch Grenzwerte G3
- "Stufe 2":: |Rm|-|Re|<20%* Re |, definiert durch Grenzwerte G2
- "Stufe 3":: |Rm|-|Re|<5%* Re |, definiert durch Grenzwerte G1

In der Darstellung der Fig. 3 werden diese "Stufen" durch Grenzwerte G1, G2 und G3 konstanten Betrages des Vektors des elektrischen Widerstands R des Winkelsensors gegeben, die im Diagramm als Kreise erscheinen. Die von diesen Kreisen berandeten kreisringförmigen Flächen bilden die einzelnen, durch die Grenzwerte G1, G2, G3 festgelegten Wertebereiche der vorstehenden "Stufen".

Damit ist die Verwendung von engeren und unterschiedlichen Stufen ("SOA"-Bereichen) möglich.

Während des Signalflusses wird jeder aktuelle Meßwert mit dem Betrag des Vektors lRe, d.h. der erwarteten Vektorlänge lRe l, verglichen. Die sich ergebende Abweichung wird einer der "Stufen" zugeordnet. Jeder Meßwert bzw. jede Gruppe von Meßwerten bekommt somit eine Bewertung. Zum Beispiel erhält bei Abweichungen von über 40% des Wertes lRel der Meßwert die Bewertung der "Stufe 0". Hierunter fallen entscheidende Fehler wie Verlust des Magneten und Kontaktfehler.

Durch dieses erfindungsgemäße Verfahren werden auch geringe Abweichungen registriert und mit einer "Stufe" bewertet. Geringe Abweichungen können z.B. durch zusätzlich auftretende, sogenannte "Offset's" ("Gleichstromdrift") entstehen.

Durch die Erfindung wird vorteilhaft die Leistungsfähigkeit einer Diagnosefunktion durch aussagekräftigere Auswertungsmöglichkeiten der "SOA" verbessert. Das Ausgangssignal des Winkel-Meßsystems wird nicht nur auf extreme Fehlerzustände hin untersucht, sondern auch auf geringe Abweichungen. Das Meßergebnis des Winkels wird bewertet.

Im Ausgangssignal des Winkel-Meßsystems ist die Zuverlässigkeit (einklassifiziert gemäß der "Stufe" des gemessenen Wertes) des Meßwertes angegeben. Im Fall eines digitalen Ausgangssignals wird jeder Stufe ein bestimmter Bit-Code zugeordnet. Der Bit-Code wird mit dem Meßsignal ausgegeben.

Wird ein Steuergerät an das Winkel-Meßsystem angeschlossen, erhält es neben der Winkelinformation zusätzlich eine Information über die Bewertung des Signals. In Abhängigkeit der "Stufe", d.h. der Fehlerzustände bzw. Ungenauigkeiten in der Winkelangabe, können dann durch das Steuergerät unterschiedliche Programme veranlaßt werden.

Die erfindungsgemäß programmierbaren "Stufen" ("SOA-Bereiche") ermöglichen eine Überprüfung der vom winkelsensor, beispielsweise des Typs "KMZ 41", abgegebenen Signale auf ihre Plausibilität. Da dies digital erfolgt, werden auch kleinste Abweichungen in der Signalverarbeitung selbst erfaßt, zum Beispiel Fehlerzustände in einer nachfolgenden Signalverstärkung und A/D Wandlung (auch als "Input Diagnose" bezeichnet).

## Patentansprüche

1. Anordnung zur Winkelmessung mit
- einem Winkelsensor zum Liefern zweier relativ zueinander um 90 Grad phasenverschobener Sensorsignale, sowie
- einer Signalverarbeitungseinrichtung zum Erzeugen eines Fehlersignals, **dadurch gekennzeichnet, daß** die Signalverarbeitungseinrichtung weiterhin eingerichtet ist
- zum Berechnen und/oder Bereitstellen erwarteter Amplitudenwerte der Sensorsignale in Abhängigkeit von vorgegebenen und/oder gemessenen Werten ausgewählter Schaltungs- und/oder Betriebsparameter der Anordnung zur Winkelmessung,
- zum Berechnen und/oder Bereitstellen einer Anzahl von für eine Abweichung zwischen den erwarteten Amplitudenwerten und Amplituden-Istwerten der Sensorsignale gestaffelt vorgegebenen Grenzwerten, durch welche eine Anzahl von Wertebereichen für die genannte Abweichung festgelegt ist,
- zum Vergleichen der erwarteten Amplitudenwerte mit den Amplituden-Istwerten der Sensorsignale,
- zum Ermitteln der Abweichung zwischen den erwarteten Amplitudenwerten und den Amplituden-Istwerten sowie zum Ermitteln des Wertebereichs, in welchen die ermittelte Abweichung fällt, und
- zum Erzeugen einer vom Fehlersignal umfaßten Zuverlässigkeitsklassen-Information darüber, in welchen Wertebereich die ermittelte Abweichung zwischen den erwarteten Amplitudenwerten und den Amplituden-Istwerten der Sensorsignale fällt.

2. Anordnung zur Winkelmessung nach Anspruch 1,
**dadurch gekennzeichnet, daß** der Zuverlässligkeitsklassen-Information ein gemäß dem Wertebereich, in den die Abweichung zwischen den erwarteten Amplitudenwerten und den Amplituden-Istwerten der Sensorsignale fällt, individuell digital codierter Bit-Code im Fehlersignal zugeordnet ist.

3. Anordnung zur Winkelmessung nach Anspruch 1 oder 2,
**dadurch gekennzeichnet, daß** in der Signalverarbeitungseinrichtung zur Berechnung eines Winkels aus den Sensorsignalen ein CORDIC-Algorithmus eingesetzt und zur Bestimmung der Amplituden-Istwerte der Sensorsignale die in diesem CORDIC-Algorithmus ohnehin vorgesehene Radius-Bestimmung herangezogen wird.

4. Anordnung zur Winkelmessung nach Anspruch 3,
**dadurch gekennzeichnet, daß** die Signalverarbeitungseinrichtung zum Erzeugen eines dem aus den Sensorsignalen berechneten Winkel zugeordneten Winkelsignals eingerichtet ist und das Fehlersignal von der Signalverarbeitungseinrichtung zusammen mit dem Winkelsignal ausgegeben wird

5. Anordnung zur Winkelmessung nach Anspruch 4,
**gekennzeichnet durch** ein Steuergerät, welchem das Winkelsignal und das Fehlersignal zugeführt werden und welches zum Ausführen unterschiedlicher Funktionen in Abhängigkeit von der im Fehlersignal enthaltenen Zuverlässigkeitsklassen-Information ausgebildet ist.

6. Anordnung zur Winkelmessung nach einem der vorhergehenden Ansprüche,
**dadurch gekennzeichnet, daß** als ausgewählter Schaltungs- und/oder Betriebsparameter der Anordnung zur Winkelmessung ein einen gemessenen Temperaturwert darstellendes Temperatursignal herangezogen wird.

7. Anordnung zur Winkelmessung nach einem der vorhergehenden Ansprüche,
**gekennzeichnet durch** einen Temperatursensor zum Messen eines Temperaturwertes und zum Bereitstellen des den gemessenen Temperaturwert darstellenden Temperatursignals.

8. Anordnung zur Winkelmessung nach einem der vorhergehenden Ansprüche,
**dadurch gekennzeichnet, daß** als ausgewählter Schaltungs- und/oder Betriebsparameter der Anordnung zur Winkelmessung ein Kermdaten des Winkelsensors repräsentierendes Signal herangezogen wird.

9. Anordnung zur Winkelmessung nach Anspruch 8,
**dadurch gekennzeichnet, daß** die Signalverarbeitungseinrichtung und/oder das Steuergerät für eine anhand der Zuverlässigkeitsklassen-Infomation durchgeführte Plausbilitätsprüfung der vom Winkelsensor gelieferten Sensorsignale eingerichtet sind.

## Claims

1. Arrangement for angle measurement comprising
an angle sensor for supplying two sensor signals phase-shifted by 90° relative to each other, and
a signal processing apparatus for generating an error signal,
**characterized in that** the signal processing apparatus is further adapted for computing and/or providing expected amplitude values of the sensor signals in dependence of preset and/or measured values of selected circuit and/or operation parameters of the arrangement for angle measurement,
for computing and/or providing a number of limit values which are preset for a deviation between the expected amplitude values and actual amplitude values of the sensor signals in a staggered way, via which limit values a number of value ranges for said deviation is defined,
for comparing the expected amplitude values with the actual amplitude values of the sensor signals,
for determining the deviation between the expected amplitude values and the actual amplitude values as well as for determining the value range in which the determined deviation comes, and
for generating a reliability class information included in the error signal, the reliability class information indicating in which value range the determined deviation between the expected amplitude values and the actual amplitude values of the sensor signals comes.

2. Arrangement for angle measurement according to claim 1,
**characterized in that** the reliability class information is associated with an, according to the value range in which the deviation between the expected amplitude values and the actual amplitude values of the sensor signals comes, individually digitally coded bit code in the error signal.

3. Arrangement for angle measurement according to claim 1 or 2,
**characterized in that** in the signal processing apparatus for computing an angle from the sensor signals a CORDIC algorithm is employed and for determining the actual amplitude values of the sensor signals the determination of a radius provided in any case in this CORDIC algorithm is taken into account.

4. Arrangement for angle measurement according to claim 3, **characterized in that** the signal processing apparatus is configured for generating an angle signal associated with the angle computed from the sensor signals and the error signal is output from the signal processing apparatus together with the angle signal.

5. Arrangement for angle measurement according to claim 4, **characterized by** a control device to which the angle signal and the error signal is supplied and which is adapted for performing different functions in dependence of the reliability class information contained in the error signal.

6. Arrangement for angle measurement according to one of the preceding claims, **characterized in that** a temperature signal representing a measured temperature value is taken into account as selected circuit and/or operation parameter of the arrangement for angle measurement.

7. Arrangement for angle measurement according to one of the preceding claims, **characterized by** a temperature sensor for measuring a temperature value and for providing the temperature signal representing the measured temperature value.

8. Arrangement for angle measurement according to one of the preceding claims, **characterized in that** a signal representing characteristics of the angle sensor is taken into account as selected circuit and/or operation parameter of the arrangement for angle measurement.

9. Arrangement for angle measurement according to claim 8, **characterized in that** the signal processing apparatus and/or the control device are adapted for a plausibility check of the sensor signals supplied from the angle sensor, the plausibility check being carried out using the reliability class information.

## Revendications

1. Dispositif de mesure d'angle avec
- un capteur d'angle pour la fourniture de deux signaux de capteur en quadrature l'un par rapport à l'autre, ainsi que
- un dispositif de traitement de signaux pour la production d'un signal d'erreur, **caractérisé en ce que** le dispositif de traitement de signaux est de surcroît réglé
- pour calculer et/ou mettre à disposition des valeurs d'amplitude attendues des signaux de capteur en fonction de valeurs prescrites et/ou mesurées de paramètres sélectionnés de circuit et/ou de service du dispositif de mesure d'angle,
- pour calculer et/ou mettre à disposition un nombre de valeurs limites échelonnées pour un écart entre les valeurs d'amplitudes attendues et les valeurs réelles d'amplitude des signaux de capteur, grâce auxquelles une plage de valeurs est déterminée pour l'écart cité,
- pour comparer les valeurs d'amplitudes attendues avec les valeurs réelles d'amplitude des signaux de capteur,
- pour déterminer l'écart entre les valeurs d'amplitude attendues et les valeurs réelles d'amplitude ainsi que pour déterminer une plage de valeurs, dans laquelle tombe l'écart déterminé, et
- pour produire une information relative aux classes de fiabilité comprise dans le signal d'erreur, à savoir dans quelle plage de valeurs se situe l'écart déterminé entre les valeurs d'amplitudes attendues et les valeurs réelles d'amplitude des signaux de capteur.

2. Dispositif de mesure d'angle selon la revendication 1,
**caractérisé en ce qu'**à l'information relative aux classes de fiabilité est affecté un code bit à codage numérique individuel selon la plage de mesure, dans laquelle l'écart se situe entre les valeurs d'amplitudes attendues et les valeurs réelles d'amplitude des signaux de capteur.

3. Dispositif de mesure d'angle selon la revendication 1 ou 2,
**caractérisé en ce qu'**un algorithme CORDIC est utilisé dans le dispositif de traitement de signaux pour calculer un angle à partir des signaux de capteur, et que la détermination du rayon prévue en outre dans cet algorithme CORDIC est déduite pour déterminer les valeurs réelles d'amplitude des signaux de capteur.

4. Dispositif de mesure d'angle selon la revendication 3,
**caractérisé en ce que** le dispositif de traitement de signaux est réglé pour produire un signal d'angle affecté à l'angle calculé à partir des signaux de capteur et que le signal d'erreur est émis par le dispositif de traitement de signaux conjointement avec le signal d'angle.

5. Dispositif de mesure d'angle selon la revendication 4,
**caractérisé par** un appareil de commande, auquel sont conduits le signal d'angle et le signal d'erreur et qui est conçu pour exécuter différentes fonctions selon l'information relatives aux classes de fiabilité obtenue dans le signal d'erreur.

6. Dispositif de mesure d'angle selon l'une quelconque des revendications précédentes,
**caractérisé en ce qu'**un signal de température représentant une valeur de température mesurée est déduit comme paramètre sélectionné de circuit et/ou de service du dispositif de mesure d'angle.

7. Dispositif de mesure d'angle selon l'une quelconque des revendications précédentes, **caractérisé par** un capteur de température pour mesurer une valeur de température et pour mettre à disposition le signal de température représentant la valeur de température mesurée.

8. Dispositif de mesure d'angle selon l'une quelconque des revendications précédentes, **caractérisé en ce qu'**un signal pour représenter des données caractéristiques du capteur d'angle est déduit comme paramètre sélectionné de circuit et/ou de service du dispositif de mesure d'angle.

9. Dispositif de mesure d'angle selon la revendication 8,
**caractérisé en ce que** le dispositif de traitement de signaux et/ou l'appareil de commande sont réglés pour un contrôle de plausibilité des signaux de capteur fournis par le capteur d'angle, contrôle entrepris à l'aide de l'information relative aux classes de fiabilité.
